# EUROPEAN PATENT SPECIFICATION

(11) **EP 2 874 079 B1**
(45) Date of publication and mention of the grant of the patent: **26.04.2017**
(21) Application number: 14192733.5
(22) Date of filing: 11.11.2014
(51) Int. Cl.: G06F 17/30

(54) **MOBILE DATABASE INITIALIZATION AND UPDATE FOR OFFLINE CONSUMPTION**
Mobile Datenbankinitialisierung und Aktualisierung für Offline-Nutzung
Initialisation de base de données mobile et mise à jour pour utilisation hors ligne

(30) Priority: 15.11.2013 US 201314080968
(43) Date of publication of application: 20.05.2015
(73) Proprietor: SAP SE, 69190 Walldorf (DE)
(72) Inventor: Fast, Paul, 69190 Walldorf (DE); Borges, Matthew, 69190 Walldorf (DE); Mcclements, Tim, 69190 Walldorf (DE); Neudoerffer, Dave, 69190 Walldorf (DE); Lacasse, Martin, 69190 Walldorf (DE); Chamberlain, Russ, 69190 Walldorf (DE)
(74) Representative: Cole, Douglas Lloyd

(56) References cited:
- US-A1- 2002 059 292
- US-A1- 2010 057 938
- US-A1- 2012 158 828

## Description

### FIELD

The present invention relates generally to transferring data between data sources.

More particularly, the present invention relates to systems and methods for providing data mappings between different data models and transferring data from one data source to another data source using the database mapping.

### BACKGROUND

As mobile electronic technology advances, user-side mobile devices are increasing the demand for data more and more in the field. This has led to the organization of data into mobile versions of databases in mobile electronic devices. However, because a continuous, stable, high-bandwidth data connection may not always be available between a mobile device in the field and a database server facility on the backend, queries for new data or updates of data may encounter speed performance bottlenecks.

Thus, there remains a need for more efficient methods of handling mobile database type data traffic.

US 2012/0158828 discloses a system for handling bulk initial downloads of databases to mobile devices. In response to a subscription request, a server constructs the database to the mobile device's requirements by impersonating the mobile device and then sends the database, compressed and over an encrypted session, to the mobile device.

Aspects of the invention are set out in the independent claims. Certain preferred features are set out in the dependent claims.

### BRIEF DESCRIPTION OF THE DRAWINGS

FIG. 1 illustrates an exemplary server system in a communication network according to an embodiment.
FIG. 2 illustrates an exemplary process according to an embodiment.
FIG. 3 illustrates an exemplary process according to an embodiment.
FIG. 4 illustrates an exemplary method according to an embodiment.
FIG. 5 illustrates an exemplary method according to an embodiment.
FIG. 6 illustrates an example computer system according to an embodiment.

### DETAILED DESCRIPTION

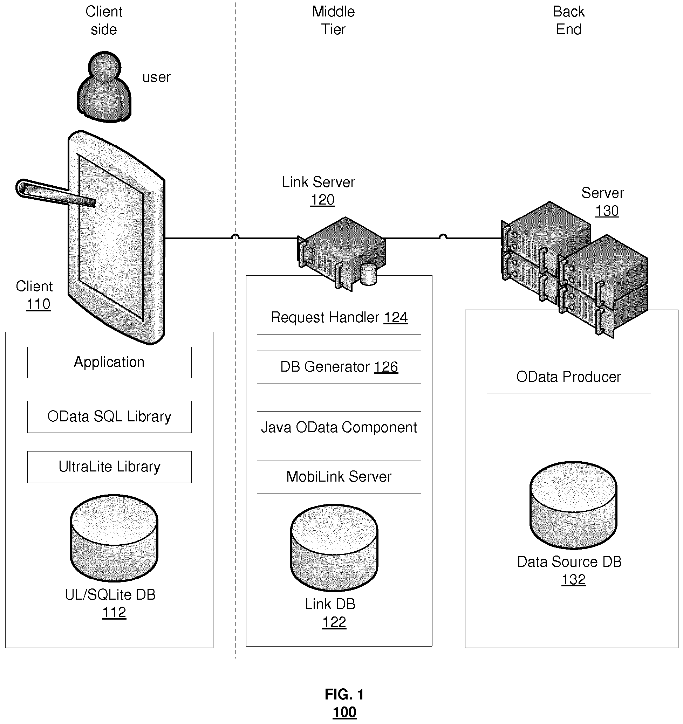

FIG. 1 illustrates an exemplary server system 120 in a communication network 100 according to an embodiment.

According to an example a server system 120 (link server, in Middle Tier) may include a request handler 124 and a database generator 126. The request handler 124 may receive at least one request from a mobile client device 110 (client) on a user side (Client Side) or from a source server 130 (server, on the Back End). If the request handler 124 determines that the at least one request requires an initialization of a first mobile database 112 in the mobile client device 110 on the user side, the database generator 126 may generate a second mobile database 122 in the server system 120 populated with corresponding requested data from data source DB 132 of the source server 130, and the request handler 124 may transmit the second mobile database 122 with the corresponding requested data as a file to the mobile client device 110. The file of the second mobile database 122 may be loaded and stored on the mobile client device replacing the first mobile database 112.

According to an example the mobile client device 110 may be offline or not connected for unpredictable time periods. That is, the mobile client device 110 may be connected to the server system 120 intermittently. As such, the mobile client device 110 may need to optimize communication of data using an offline communication protocol (such as e.g. a protocol provided by SYBASE SQL Anywhere MobiLink®), which may ensure communication data integrity and reduce data corruption even in case of intermittent communication disconnections.

According to an example the request handler 124 may receive database format information from the client device 110 and the source server 130, along with data field and data relationship information/metadata.

According to an embodiment, the server system 120 with the database generator 126 constructs or generates the second mobile database in a file format that is compatible to the client device 110, for example, by translating data of the database format from source server 130 and constructing the second mobile database using UltraLite or SQLite format (or other formats) compatible to the client device 110. In this fashion, the second mobile database may be copied or loaded to the client device 110 without requiring the client device 110 to reformat or to translate the data from one database format to another database format.

If the request handler 124 determines that the at least one request does not require an initialization of a first mobile database 112, the server system 120 may perform other requests.

According to an example the request handler 124 determines that the at least one request requires the initialization of the first mobile database 112, if a portion of requested data of the first mobile database 112 does not exist in the mobile client device 110 on the user side. This may be done by keeping the first mobile database 112 and the second mobile database 122 synchronized over time, and then the request handler 124 may look in the second mobile database 122 to quickly determine if the first mobile database 112 exists or contains the requested data (or portion of).

According to an embodiment, the request handler 124 determines that the at least one request requires the initialization of the first mobile database 112, if the portion is greater than a preset amount.

According to an example the request handler 124 determines that the at least one request requires the initialization of the first mobile database 112, if the portion is greater than a preset percentage of total requested data.

According to an example the request handler 124 determines that the at least one request requires the initialization of the first mobile database 112, if the at least one request is a force refresh command. A force refresh command may be sent from either the client 110 or the server 130 on back end to force initialize the first mobile database 112, regardless whether the requested data exists in the mobile client device.

According to an example the server system 120 communicates with the mobile client 110 device via a (wired, wireless, etc.) link.

According to an example the server system 120 communicates with the data source server 130 via a (wired, wireless, etc.) network.

According to an example the server system 120 may include additional components such as Java OData components, MobiLink Server, etc. to facilitate translation of data formats from source server 130 to data formats of client device 110. The source server 130 may have its components such as the OData producer. The client device 110 may include applications, OData SQL Library, UltraLite Library, etc., to facilitate its processing of data, for applications in the field such as sales, marketing, order processing, warehouse inventory auditing/accounting, etc.

In one example the client device 110 may request a subset of a master database maintained by one or more data providers in source server 130. The client device 110 may request multiple subsets of data from master databases maintained by different data providers in source server 130. The data made available to the client device 110 by the data providers in source server 130 may be specific to an application being executed on the client device 110 and/or specific to the data the user of the client device 110 is authorized to receive.

The database stored by the data provider in source server 130 may be based on a model (e.g., object or hierarchical model) that is different from a model (e.g., relational model) used by the client device 110. The protocol (e.g., Open Data Protocol (OData)) used to access the data from the data providers in source server 130 may also provide data based on a model that is different from the model used by the client device 110. In one example the protocol used to communicate between the data provider in source server 130 and the server 120 may be different from the protocol used to communicate between the server 120 and the client device 110. The different data models and/or protocols may make it difficult for users of the client devices 110 to access and manipulate the data provided by the data providers in source server 130.

To allow the client device 110 to access and manipulate data received from the data provider in source server 130, the client device 110 and/or the server 120 may perform a mapping between a first database model and a second database model used by the client device 110. The first database model may be a lightweight model used by the client device 110 or a model of the protocol used to communicate between the client device 110 and the server 120. The second database model may be a model used by the data provider in source server 130 or a model of the protocol used to expose data provided by the data provider in source server 130.

The mapping between the two models may include parsing metadata of the second database model to learn the structure of the second database model and creating a corresponding structure using the first database model that can store the data received from the data provider in source server 130. The mapping between the two models may be performed by the server 120 and/or the client device 110. The mapping may be used by the client device 110 and/or the server 120 to communicate directly with the data provider in source server 130. The mapping may also be used to synchronize the data stored in the client device 110 and the data provider in source server 130. The mapping may preserve the models and allow for requests to be sent between the client device 110 and the data provider in source server 130 using the first or the second model.

The client device 110 may execute applications provided on the client device 110 or may execute web-based applications provided by the server 120 via the network. The applications executed by the client device 110 may send and receive data to and from the server 120 and/or the data providers in source server 130. The data may be generated, displayed and processed by the client device 110.

The server 120 may provide a staging area for the data before it is transferred to the client device 110 from the data provider in source server 130. The server 120 may perform the database mapping and may include a database to store the data to be transferred to the client device 110. The database in the server 120 may be an in-memory database (e.g., SAP® HANA database).

The network may be an internal network, an external network or a plurality of different interconnected networks which may include the Internet. In one example the server 120 may connect to the data providers in source server 130 via an external network and may connect to the client device 110 via an internal network.

The client device 110 may include, for example, a mobile device (e.g., mobile phone or a smart phone), a personal computer, a tablet, a terminal device, or a personal digital assistant (PDA). The client device 110 may include an input device (e.g., a touch screen, a touch pad, a mouse or a keyboard) to receive commands from the user. In one embodiment, the client device 110 may be a terminal that displays information provided by the server 120. The server 120 may cause the client devices 110 to execute applications and display information on the client devices 110 in response to commands issued at the client device 110.

The data provider in source server 130 may be a data warehouse. The data warehouse may perform data cleaning, integration, transformation and refreshing. The data in the data warehouse may expose data via the Open Data Protocol (OData). In general, OData is a Web protocol for requesting and updating data stored at the data provider in source server 130. OData is operated by applying and building upon Web technologies such as Hypertext Transfer Protocol (HTTP), Atom Publishing Protocol (AtomPub), and JavaScript® Object Notation (JSON) to provide access to information from a variety of applications, services, and stores. OData may be used to expose and access information from a variety of sources including, but not limited to, relational databases, file systems, content management systems and traditional Web sites.

In one example the client device 110 may use a relational database and OData may be used to expose data provided by the data provider in source server 130. If data is transferred from the data provider in source server 130 to the client device 110 via the server 120, the server 120 may include a Java OData component to communicate with the data provider in source server 130 and a program to convert the OData model into the relational database used by the client device 110. The server 120 may include SYBASE MobiLink® synchronization technology to communicate with the data provider in source server 130 and/or the client device 110. The server 120 may use OData metadata to build the relational data model and generate the mapping from the OData to the relational model. The relational model and the mapping may be stored in the server 120 and transferred to the client device 110 upon request. The client device 110 may communicate with the server 120 via the MobiLink protocol and may include an SQL based application (e.g., SYBASE UltraLite® database technology) to process the data. SYBASE UltraLite® may provide a lightweight application designed for small-footprint mobile devices using relational databases.

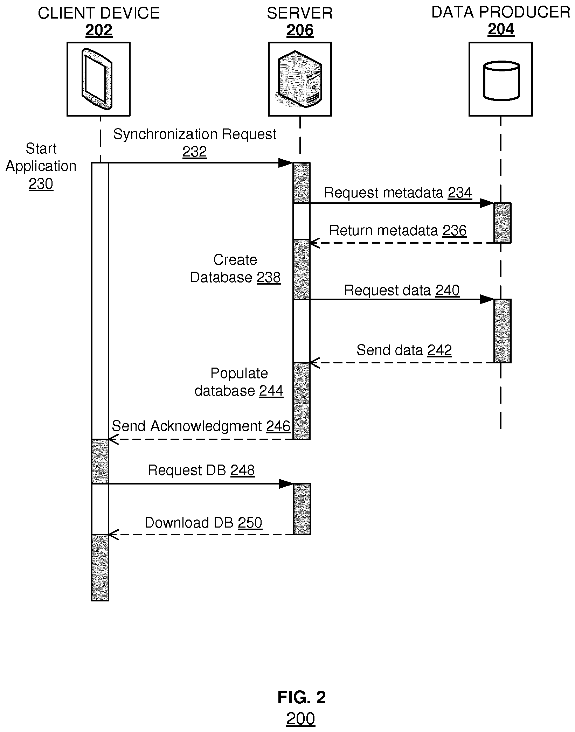

FIG. 2 illustrates a method 200 for preparing and loading a database on a client device 202 from a data producer 204 according to an embodiment of the present invention. The client device 202 may use a first database model that is different from a second database model used to expose data in the data producer 204. The server 206 may generate the mapping between the first database model and the second database model. The protocol used to expose and update data from the data producer 204 may be different from the protocol used to transfer data between the client device 202 and the server 206. In one embodiment, the protocol used to expose data from the data producer 204 may be an online protocol (e.g., OData) and the protocol used to transfer data between the client device 202 and the data producer 204 may be an offline protocol (e.g., protocol provided by SYBASE SQL Anywhere MobiLink®).

According to an example the client device 202 may be offline or not connected for unpredictable time periods. That is, the client device 202 may be connected to the data producer 204 intermittently. As such, the client device 202 may need to optimize communication of data using an offline communication protocol (e.g., protocol provided by SYBASE SQL Anywhere MobiLink®), which may ensure communication data integrity and reduce data corruption even in case of intermittent communication disconnections.

The client device 202 may include one or more applications that use a subset of data stored by the data producer 204. When the application 230 is started on the client device 202, the client device 202 may not have a local database including the subset of data needed by the application. If the client device 202 does not include a local database, the client device 202 may create a skeletal template database.

The skeletal template database may include identification information provided by the user and/or the application. The skeletal template database may include a user information table, a defining request table, a delta token table, and a metadata table. The user information table may store a user name and a password for users using the client device 202. The user information table may be used to connect to the data producer 204 and/or the server 206. The defining request table may store requests for entity sets that are wanted in the client database. The delta token table may store keys used for delta computations (e.g., when the initial download is requested). The metadata table may include metadata of database models used by data providers 204 and the client device 202. For example, the metadata table may include the metadata of the second database model used to expose data from the data producer 204. The metadata table may allow the client device 202 to map the data stored on the client device 202 into the database model used by the data producer 204. The skeletal template database may be populated with identification information from the user and/or the application.

The client device 202 may issue a synchronization request 232 to the server 206. The synchronization request 232 may include the skeletal template database which includes user information (e.g., user name and password) and/or the data needed by the application (e.g., address of the data). The server 206 may make a determination of whether this is an initial synchronization request for the client device 202. If the synchronization request 232 is a first request, the server 206 may connect to the data producer 204 and request the metadata 234 of the database. The server 206 may use the user information and/or address of the data to connect to the data producer 204 and make the request for the metadata 234.

In response to the request, the data producer 204 may send the metadata 236 to the server 206. The metadata may include the metadata for the database model used by the data producer 204. The metadata may include a metadata document that contains a description of the feeds, types, properties and relationships. The metadata document may describe the data model (e.g., the structure and organization of all the resources). The data producer 204 may also provide a service document together with the metadata document. The service document may include lists of all the top-level feeds and the addresses of the feeds.

The server 206 may use the metadata of the second database model to create a database 238 to be used by the client device 202. Creating the server database 238 may include the server 206 parsing and storing the metadata into an in-memory data structure. Based on the received metadata of the second database model, the server may create tables to store the data of the second database model and create tables providing mapping between the models. The server 206 may store the skeletal template tables received from the client device 202, tables including metadata of the server database, tables including the mapping between the first database model and the second database model, and the metadata of the second database model in the server memory (e.g., using the in-memory data structure).

After the server database is created, the server 206 may request data 240 to be sent from the data producer 204. The server 206 may issue the requests in the defining request table received from the client device 202. The server 206 may use OData to request data from the data producer 204. In response to the data request 240, the data producer may provide the data 242 to the server 206 and the server 206 may populate the server database 244 with the received data. If multiple requests provide results in the same entity the update statements, instead of inserts, may be used to include the received data in the tables.

If the data producer 204 supports "deltas," which provide for retrieving changes to a given set of data, the requests and the responses may include the delta links. If the data producer 204 does not support deltas, the server 206 may keep track of the changes to the data stored on the client device 202.

Once the server database is created and populated, acknowledgment 246 can be sent to the client device 202 indicating that the server database is ready to be downloaded. The acknowledgement may include a path to the server database. The client device 202 may request the database 248 and download the database 250. The skeletal template database on the client device 202 may be replaced with the downloaded database.

The client device 202 may use the data in the downloaded database to perform operations using the data and make changes to the data in the downloaded database. The client device 202 may use the mapping data and the second database model metadata to map the metadata of the first database model into the second database model.

The data producer 204 and/or the server 206 may use server driven paging to transfer data. During server driven paging each interim page may include a link to the next page. The final page in the transfer may include a delta link for getting changes to the data.

In FIG. 2, it is important to note that additional and/or alternative component arrangements, interactions, etc. are easily possible. For example and inter alia a client device 202 may at various points/times communicate, interact, etc. directly with a data producer 204.

### Creating the Database for the Client Device

Creating the server database 238 may include creating a plurality of system tables. The system tables may include a first set of tables including tables and columns that are generated to store the data from the data producer 204, a second set of tables including information about the metadata received from the data producer 204, and a third set of tables including the mapping between the first database model and the second database model.

The second set of tables including the metadata received from the data producer 204 may include entity sets, entity types, and navigation properties. The second set of tables may also include the metadata document and the service document received from the data producer 204.

The third set of tables including the mapping between the first database model and the second database model may include mapping of the second database model metadata to the physical, logical, etc. representation in the first database model. For example, the mapping may include that an entity set X will store data in Table B.

A library may be created by reading the plurality of system tables and creating in-memory data structures that store the information in the plurality of system tables. The library may be used by the server 206 and/or the client device 202 to issue requests using the second database model used by the data producer 204. Thus, the server 206 and/or the client device 202 may directly communicate with the data producer 204 to access and manipulate the data in the database. The requests for the data producer 204 may be analyzed by using the system tables stored in the library to ensure that they are valid requests. Once the requested data is received, the mapping in the library may be used to convert the request into a query used by the second database model.

### Generating the Mapping

The mapping between the first database model (e.g., relational model) and the second database model (e.g., entity data model) may include mapping each entity set of the second database model to a table in the first database model. The entity set may include a group of entities consisting of named and typed properties. For example, a supplier entity set may include a set of supplier entity type instances.

Each entry in the second database model may represent a structured record with a key that has a list of properties of primitive or complex types. Each primitive property of an entity type may be mapped to a column in the table. Table 1 illustrates example of how primitive properties may be mapped to columns in the table.

**TABLE 1**

| **Primitive Property** | **Description** | **Mapped Table Column** |
|---|---|---|
| Edm.Binary | Represents fixed- or variable- length binary data | BINARY/LONG BINARY (depending on MaxLength) |
| Edm.Boolean | Represents the mathematical concept of binary-valued logic | BIT |
| Ed m. Byte | Unsigned 8-bit integer value | TINYINT |
| Edm.DateTime | Represents date and time | TIMESTAMP |
| Edm.DateTimeOffset | Represents date and time as an Offset from GMT | TIMESTAMP WITH TIMEZONE |
| Edm.Decimal | Represents numeric values with fixed precision and scale. | DECIMAL/NUMBERIC |
| Edm.Double | Represents a floating point number with 15 digits precision | DOUBLE |
| Edm.GUID | Represents a 16-byte (128-bit) unique identifier value | UUID |
| Edm.INT16 | Represents a signed 16-bit integer value | SMALLINT |
| Edm.INT32 | Represents a signed 32-bit integer value | INTEGER |
| Edm.INT64 | Represents a signed 64-bit integer value | BIGINT |
| Edm.SBYTE | Represents a signed 8-bit integer value | SMALLINT |
| Edm.SINGLE | Represents a floating point number with 7 digits precision | FLOAT |
| Edm.String | Represents fixed- or variable-length character data | VARCHAR/LONG VARCHAR (depending on MaxLength) |
| Edm.Time | Represents the time of day | TIME |
| Edm.TimeOffset | Represents time as an Offset in minutes from GMT | TIME WITH TIMEZONE |

Other types of data (e.g., geographic data types and geometry data types) that may not be supported by the second database model may be mapped to LONG VARCHAR.

Named resource streams and media types in the second database model may be mapped to either a LONG BINARY or a LONG VARCHAR based on the media type in the first database model. The media resource may be an unstructured piece of data or stream (e.g., document, image or video) providing a media link entry with links to the media resource. The media link entry may include additional metadata about the media resource.

Keys of an entity type may be mapped to primary key columns of the corresponding entry type table. The keys may uniquely identify instances of the entity type and provide for relationship identification. The primary keys provide unique values to each table and do not contain NULL values. Each entity set may have its own association table, containment table, etc., allocated to compartmentalized memory spaces to provide additional security, or may share tables and/or memory, for example, some entities of same or similar security clearance levels may share tables and/or memory, but other security clearance level entities may need to be isolated to their own tables and/or memory.

Associations in the second database model may be mapped to an association table in the first dataset model. Associations in the second database model may define relationships between two or more entity types. For example, the association may define the relationship between supplier and products the supplier provides. Instances of associations may be grouped in association sets. The association table may include one column for each primary key of the corresponding entity types. The association table may include a foreign key for each of the entity type tables. The foreign key may be used to cross-reference related data across tables.

For example, if the second database model includes a first entity E1 with key properties e1_pk1 and e1_pk2, and a second entity E2 with key properties e2_pk1, e2_pk2, and e2_pk3, which are related using association A1, an association table A1 may be created in the first database model with columns e1_pk1, e1_pk2, e2_pk1, e2_pk2 and e2_pk3. A first foreign key from A1 to E1 may be included using columns e1_pk1 and e1_pk2, and a second foreign key from A1 to E2 may be included using columns e2_pk1, e2_pk2 and e2_pk3.

Navigation properties providing an underlying association of an entity type to other related entries in the second database model may not need to be mapped because the associations of the entity types are already provided in the association table of the first database model.

Collections in the second database model may be mapped to a collections table in the first database model. Collections may be a navigation property on an entity type that identifies a collection of entities. The collection may include a list that contains elements of primitive type or complex type. The collection table in the first database model may include one column for each primary key of the entity type the collection belongs to, with a foreign key (using these columns) to that entity type table. The rest of the columns in the collection table may be determined by the type of collection. For a primitive type, the table may contain one extra column with a type mapping as described in primitive properties.

The complex type properties in the second database model may be mapped to a table in the first database model having the same name as the complex type. The complex types, which may include collections, may include a list of properties but with no key. If the complex type is a collection, it may be represented in the collection table. Each row of the complex type table in the second database model may include a primary key column of the entity type the complex type is used with and a column for each property. The type in each property column may be mapped as described above with primitive properties. A foreign key may be included from the complex type table to the entity type table.

With the complex type table, if the same complex type is used by more than one entity type, a different complex type table may be included for each entity. In another embodiment, one complex type table may be created for each complex type in the metadata of the second database model. An autoincrement primary key column may be included in this embodiment. If the complex type is not used in a collection, then the entity type table may have one column for the complex type with a foreign key to the complex type table. If the complex type is used in a collection, another table (e.g., similar to the association table) may be used to map entity types to their complex types.

Containment properties in the second database model may be mapped to containment tables in the first database model. Containment properties may provide for navigation properties and/or association. Similar to the association table, the containment table may include one column for each primary key of the corresponding entity types. The containment table may include a foreign key for each of the entity type tables. The foreign key may be used to cross-reference related data across the tables.

Entity type and complex types in the second database model may be derived from a base entity type and complex type, respectively. The base type may be where the key is defined. In one embodiment, the derived types may be accounted for in the second database model by including the base type properties in the tables for the derived types. No separate tables may be needed with this embodiment. In another embodiment, a base type table and a derived type table may be created for the mapping. The base type table and the derived type table may include key columns and the derived table may include a foreign key to the base table.

If the second database model supports entity tags (ETags), each entity table may include an additional column for the ETag and one additional column for each media resource or named resource stream for the ETag. The ETags may be supported for entity types, names resource streams, and media resources.

A number of characters used for an entry in the second database model may exceed a number of characters used for an entry in the first database model. For example, the second database model (e.g., OData) may have a limit of 512 characters for namespace names and 480 characters for simple identifiers (e.g., names of entity type, entity sets and associations). The first database model (e.g., UltraLite data model) may have a limit of 128 characters. Because names in the second database model cannot be always translated directly to names in the first database model, names that would be longer than the limit (e.g., 129 characters), may be hashed to provide data with a number of characters below the limit of the first database model.

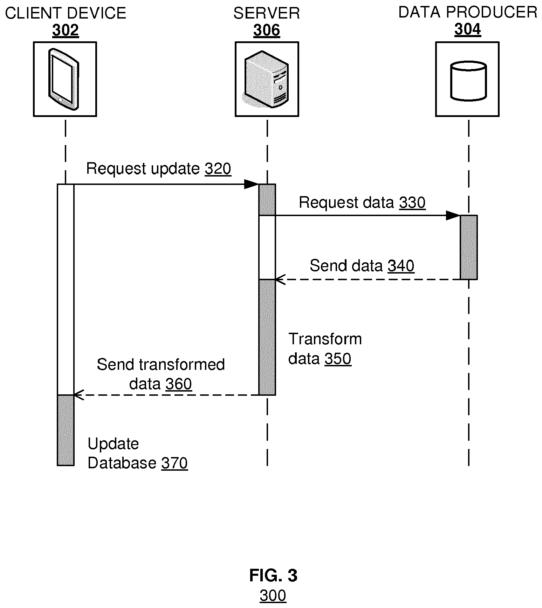

FIG. 3 illustrates a method 300 for synchronizing a client database on the client device 302 and a database maintained by a data producer 304 according to an embodiment of the present invention. The client device 302 may use a first database model that is different from a second database model used to expose data in the data producer 304. A server 306 may analyze the metadata received from the data producer 304 and provide mapping between the first database model and the second database model. The protocol used to expose the data from the data producer 304 may be different from the protocol used to transfer data between the client device 302 and the server 306.

The client device 302 may issue a request 320 to update the database stored on the client device 302. The request 320 may be a request to update the whole client database, or to update a portion of the client database. The request 320 may include sending a table including the user information and a delta token table. The user table may store user names and passwords for users using the client device 302. The delta token table may store keys used for delta computations.

In response to the request, the server 306 may request the data (the request 330) from the data producer 304. The request 330 to the data producer 304 may be delta queries. The request 330 may include delta links to retrieve the changes. Based on the delta links the data producer 304 may send data 340 that has changed since the time stamp indicated by the delta links. The server 306 may parse received data from the data producer 304 and transform 350 the data into the data model used by the client device 302. The transformed data may be sent 360 to the client device 302 and the database may be updated 370 with the changes.

If the data producer 304 does not support deltas, the server 306 may determine the deltas for the data stored in the client database. The server 306 may periodically request data from the data producer 304 and update the data stored in the server 306. The changed data may be tracked and stored by the server 306. The changes may be sent to the client device 302, in a response to the request to update the client database.

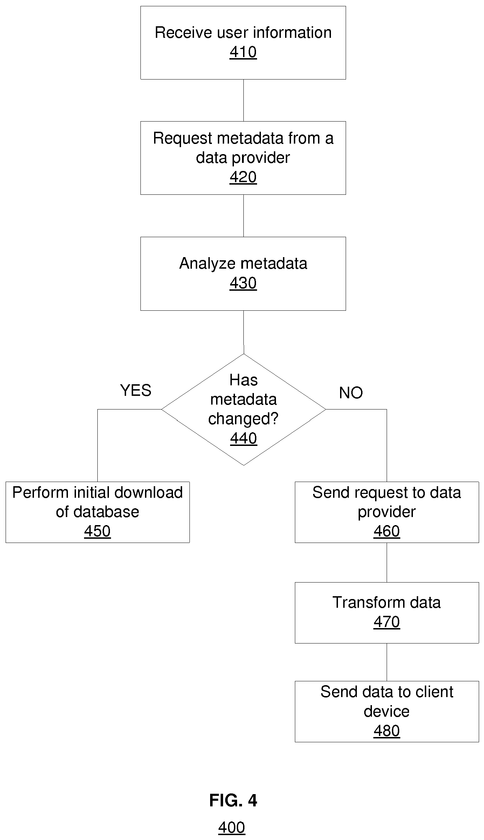

FIG. 4 illustrates a method 400 for synchronizing a client database on the client device and a database maintained by a data producer according to another embodiment of the present invention. The method 400 may include receiving user information 410, requesting metadata from a data provider 420, analyzing the metadata 430, performing an initial download 450 if the metadata has changed, sending a request for data to a data provider 460 if the metadata has not changed, transforming the requested data 470 and sending the data to the client device 480.

Receiving the user information 410 may include user information from a client device requesting an upload or synchronization of the client database. The user information may include the name and password of the user, the requests made to obtain the client database, and a delta token table.

The server may request metadata from the data provider 420 to determine if the schema of the database has changed. The request 420 may be made using the user information and the requests received from the client device.

The metadata received from the data provider may be analyzed 430 to determine if the metadata has changed. The metadata document and/or the service document may be analyzed to make the determination. If the hash or the signature of the metadata has changed (Yes in step 440), the initial download of the database 450 may be performed by the server. As discussed above with reference to FIG. 2, the initial download may include analyzing the metadata and providing mapping between the model used by the data provider and the model used by the client device.

If the hash or the signature of the metadata has not changed (No in step 440), the requests for data from the data provider 460 may be made. The requests may include delta requests and retrieve requests. The delta request may include a delta link that can be used by the data provider to determine what changes have been made to the data since the data was last requested. The retrieve request may include a request to retrieve a feed, an entry or a service document. With the retrieve request a query may need to be made to determine changes that have been made to the requested data. For example, a query can be made to determine if changes have been made to the entities and the links. A temporary set of tables (e.g., entitytemp table and linkstemp table) may be generated in the server to help perform the query for the changes. The data received from the data provider may include a new delta token returned by the data provider.

The data received from the data provider may be transformed 470 from the model used to expose the data to the model used by the client device. The transformation may be made using the mapping discussed above with reference to FIG. 2. The transformed data may be stored in the server database and/or sent to the client device. In one example only the columns with changes are sent to the client device. In another embodiment, tables that include changes may be sent to the client device.

In one example the operations of the server and the client device may be performed by a single device (e.g., mobile device or a personal computer).

The first data model or the second data model may include one or a combination of models used to store and expose data. The data models may include logical data models or physical data models. The logical data models may include hierarchical database model, network model, relational model, entity-relationship model, enhanced entity-relationship model, object model, document model, entity-attribute-value model, and star schema. The physical data model may include inverted index or flat file. Other models may include associative model, multidimensional model, multivalue model, semantic model, DML database, named graph or triplestore.

Some examples may include the above-described methods being written as one or more software components. These components, and the functionality associated with each, may be used by client, server, distributed, or peer computer systems. These components may be written in a computer language corresponding to one or more programming languages such as, functional, declarative, procedural, object-oriented, lower level languages and the like. They maybe linked to other components via various application programming interfaces and then compiled into one complete application for a server or a client. Alternatively, the components maybe implemented in server and client applications. Further, these components may be linked together via various distributed programming protocols. Some examples may include remote procedure calls being used to implement one or more of these components across a distributed programming environment. For example, a logic level may reside on a first computer system that is remotely located from a second computer system containing an interface level (e.g., a graphical user interface). These first and second computer systems can be configured in a server-client, peer-to-peer, or some other configuration. The clients can vary in complexity from mobile and handheld devices, to thin clients and on to thick clients or even other servers.

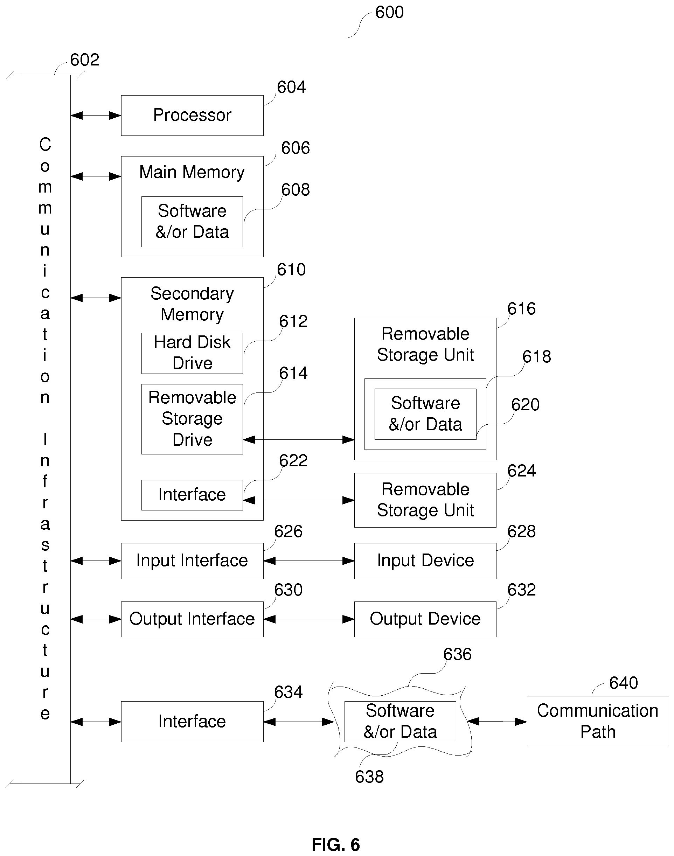

Aspects of the above may be implemented by software, firmware, hardware, or any combination thereof. FIG. 6 illustrates an example computer system 600 in which the above, or portions thereof, may be implemented as computer-readable code. Various embodiments of the above are described in terms of this example computer system 600.

Computer system 600 includes one or more processors, such as processor 604. Processor 604 can be a special purpose processor or a general purpose processor. Processor 604 is connected to a communication infrastructure 602 (for example, a bus or a network).

Computer system 600 also includes a main memory 606, preferably Random Access Memory (RAM), containing possibly inter alia computer software and/or data 608.

Computer system 600 may also include a secondary memory 610. Secondary memory 610 may include, for example, a hard disk drive 612, a removable storage drive 614, a memory stick, etc. A removable storage drive 614 may comprise a floppy disk drive, a magnetic tape drive, an optical disk drive, a flash memory, or the like. A removable storage drive 614 reads from and/or writes to a removable storage unit 616 in a well-known manner. A removable storage unit 616 may comprise a floppy disk, magnetic tape, optical disk, etc. which is read by and written to by removable storage drive 614. As will be appreciated by persons skilled in the relevant art(s) removable storage unit 616 includes a computer usable storage medium 618 having stored therein possibly inter alia computer software and/or data 620.

In alternative implementations, secondary memory 610 may include other similar means for allowing computer programs or other instructions to be loaded into computer system 600. Such means may include, for example, a removable storage unit 624 and an interface 622. Examples of such means may include a program cartridge and cartridge interface (such as that found in video game devices), a removable memory chip (such as an Erasable Programmable Read-Only Memory (EPROM), or Programmable Read-Only Memory (PROM)) and associated socket, and other removable storage units 624 and interfaces 622 which allow software and data to be transferred from the removable storage unit 624 to computer system 600.

Computer system 600 may also include an input interface 626 and a range of input devices 628 such as, possibly inter alia, a keyboard, a mouse, etc.

Computer system 600 may also include an output interface 630 and a range of output devices 632 such as, possibly inter alia, a display, one or more speakers, etc.

Computer system 600 may also include a communications interface 634. Communications interface 634 allows software and/or data 638 to be transferred between computer system 600 and external devices. Communications interface 634 may include a modem, a network interface (such as an Ethernet card), a communications port, a Personal Computer Memory Card International Association (PCMCIA) slot and card, or the like. Software and/or data 638 transferred via communications interface 634 are in the form of signals 636 which may be electronic, electromagnetic, optical, or other signals capable of being received by communications interface 634. These signals 636 are provided to communications interface 634 via a communications path 640. Communications path 640 carries signals and may be implemented using wire or cable, fiber optics, a phone line, a cellular phone link, a Radio Frequency (RF) link or other communications channels.

As used in this document, the terms "computer program medium," "computer usable medium," and "computer readable medium" generally refer to media such as removable storage unit 616, removable storage unit 624, and a hard disk installed in hard disk drive 612. Signals carried over communications path 640 can also embody the logic described herein. Computer program medium and computer usable medium can also refer to memories, such as main memory 606 and secondary memory 610, which can be memory semiconductors (e.g. Dynamic Random Access Memory (DRAM) elements, etc.). These computer program products are means for providing software to computer system 600.

Computer programs (also called computer control logic) are stored in main memory 606 and/or secondary memory 610. Computer programs may also be received via communications interface 634. Such computer programs, when executed, enable computer system 600 to implement the present invention as discussed herein. In particular, the computer programs, when executed, enable processor 604 to implement the processes of aspects of the above. Accordingly, such computer programs represent controllers of the computer system 600. Where the invention is implemented using software, the software may be stored in a computer program product and loaded into computer system 600 using removable storage drive 614, interface 622, hard drive 612 or communications interface 634.

The invention is also directed to computer program products comprising software stored on any computer useable medium. Such software, when executed in one or more data processing devices, causes data processing device(s) to operate as described herein. Embodiments of the invention employ any computer useable or readable medium, known now or in the future. Examples of computer useable mediums include, but are not limited to, primary storage devices (e.g., any type of random access memory), secondary storage devices (e.g., hard drives, floppy disks, Compact Disc Read-Only Memory (CD-ROM) disks, Zip disks, tapes, magnetic storage devices, optical storage devices, Microelectromechanical Systems (MEMS), nanotechnological storage device, etc.), and communication mediums (e.g., wired and wireless communications networks, local area networks, wide area networks, intranets, etc.).

It is important to note that the particulars of FIG. 6 (such as for example the specific components that are presented, the component arrangement that is depicted, etc.) are illustrative only and it will be readily apparent to one of ordinary skill in the relevant art that numerous alternatives (including inter alia other or different components, alternative arrangements, etc.) are easily possible.

The above-illustrated software components are tangibly stored on a computer readable storage medium as instructions. The term "computer readable storage medium" should be taken to include a single medium or multiple media that stores one or more sets of instructions. The term "computer readable storage medium" should be taken to include any physical article that is capable of undergoing a set of physical changes to physically store, encode, or otherwise carry a set of instructions for execution by a computer system which causes the computer system to perform any of the methods or process steps described, represented, or illustrated herein. Examples of computer readable storage media include, but are not limited to: magnetic media, such as hard disks, floppy disks, and magnetic tape; optical media such as CD-ROMs, DVDs and holographic devices; magneto-optical media; and hardware devices that are specially configured to store and execute, such as application-specific integrated circuits ("ASICs"), programmable logic devices ("PLDs") and ROM and RAM devices. Examples of computer readable instructions include machine code, such as produced by a compiler, and files containing higher-level code that are executed by a computer using an interpreter. For example, an embodiment of the disclosure may be implemented using Java, C++, or other object-oriented programming language and development tools. Another embodiment of the disclosure may be implemented in hardwired circuitry in place of, or in combination with machine readable software instructions.

A data provider may be an information resource. Data provider may include sources of data that enable data storage and retrieval. Data provider may include databases, such as, relational, transactional, hierarchical, multi-dimensional (e.g., Online Analytic Processing - OLAP), object oriented databases, and the like. Further data provider may include tabular data (e.g., spreadsheets, delimited text files), data tagged with a markup language (e.g., XML data), transactional data, unstructured data (e.g., text files, screen scrapings), hierarchical data (e.g., data in a file system, XML data), files, a plurality of reports, and any other data source accessible through an established protocol, such as, Open DataBase Connectivity (ODBC), produced by an underlying software system (e.g., Enterprise resource planning system), and the like. These data providers can include associated data foundations, semantic layers, management systems, security systems and so on.

A semantic layer is an abstraction overlying one or more data sources. It removes the need for a user to master the various subtleties of existing query languages when writing queries. The provided abstraction includes metadata description of the data sources. The metadata can include terms meaningful for a user in place of the logical or physical descriptions used by the data source. For example, common business terms in place of table and column names. These terms can be localized and or domain specific. The semantic layer may include logic associated with the underlying data allowing it to automatically formulate queries for execution against the underlying data sources. The logic includes connection to, structure for, and aspects of the data sources. Some semantic layers can be published, so that it can be shared by many clients and users. Some semantic layers implement security at a granularity corresponding to the underlying data sources' structure or at the semantic layer. The specific forms of semantic layers includes data model objects that describe the underlying data source and define dimensions, attributes and measures with the underlying data. The objects can represent relationships between dimension members, and can provide calculations associated with the underlying data.

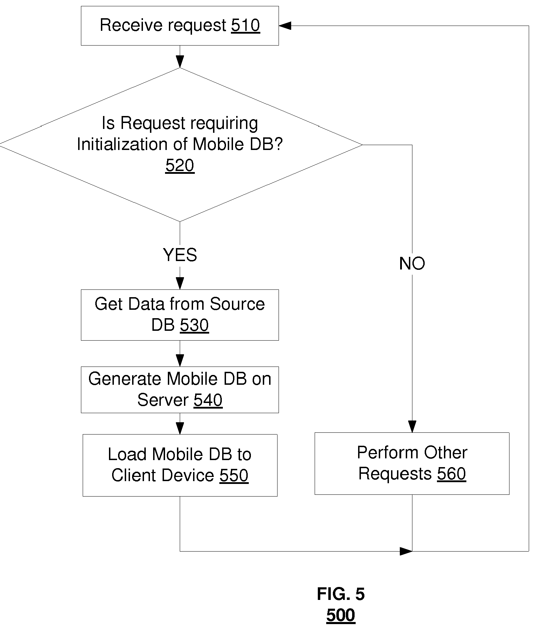

FIG. 5 illustrates an exemplary method 500 according to an embodiment.

According to an example at block 510, the request handler 124 may receive at least one request from a mobile client device 110 (client) on a user side (Client Side) or from a source server 130 (server, on Back End).

At block 520, the request handler 124 determines whether the at least one request requires an initialization of a first mobile database 112 in the mobile client device 110 on the user side.

If the request handler 124 determines that the at least one request requires an initialization of a first mobile database 112, at block 530, the database generator 126 may get the requested data from the source DB.

Then at block 540, the database generator 126 may generate a second mobile database 122 in the server system 120 populated with corresponding requested data from data source DB 132 of the source server 130.

Then at block 550, the request handler 124 may transmit the second mobile database 122 with the corresponding requested data as a file to the mobile client device 110. The file of the second mobile database 122 may be loaded and stored on the mobile client device to replace or become as the first mobile database 112. Then, the process returns to block 510 to receive further requests.

If the request handler 124 determines that the at least one request does not require an initialization of a first mobile database 112, at block 560, the server system 120 performs other requests. Then, the process returns to block 510 to receive further requests.

It is appreciated that the disclosure is not limited to the described examples and that any number of scenarios in which conflicting appointments exist may be resolved.

Although the disclosure has been described with reference to several examples it is understood that the words that have been used are words of description and illustration, rather than words of limitation. Changes may be made within the purview of the appended claims, as presently stated and as amended, without departing from the scope of the disclosure in its aspects. Although the disclosure has been described with reference to particular means, materials and embodiments, the disclosure is not intended to be limited to the particulars disclosed; rather the disclosure extends to all functionally equivalent structures, methods, and uses such as are within the scope of the appended claims.

While the computer-readable medium may be described as a single medium, the term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processor or that cause a computer system to perform any one or more of the embodiments disclosed herein.

The computer-readable medium may comprise a non-transitory computer-readable medium or media and/or comprise a transitory computer-readable medium or media. In a particular non-limiting, exemplary embodiment, the computer-readable medium may include a solid-state memory such as a memory card or other package that houses one or more non-volatile read-only memories. Further, the computer-readable medium may be a random access memory or other volatile re-writable memory. Additionally, the computer-readable medium may include a magneto-optical or optical medium, such as a disk or tapes or other storage device to capture carrier wave signals such as a signal communicated over a transmission medium. Accordingly, the disclosure is considered to include any computer-readable medium or other equivalents and successor media, in which data or instructions may be stored.

Although the present application describes specific examples which may be implemented as code segments in computer-readable media, it is to be understood that dedicated hardware implementations, such as application specific integrated circuits, programmable logic arrays and other hardware devices, may be constructed to implement one or more of the embodiments described herein. Applications that may include the various examples set forth herein may broadly include a variety of electronic and computer systems. Accordingly, the present application may encompass software, firmware, and hardware implementations, or combinations thereof.

The present specification describes components and functions that may be implemented in particular examples with reference to particular standards and protocols, the disclosure is not limited to such standards and protocols. Such standards are periodically superseded by faster or more efficient equivalents having essentially the same functions. Accordingly, replacement standards and protocols having the same or similar functions are considered equivalents thereof.

The illustrations of the examples described herein are intended to provide a general understanding of the various embodiments. The illustrations are not intended to serve as a complete description of all of the elements and features of apparatus and systems that utilize the structures or methods described herein. Many other examples may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

One or more examples of the disclosure may be referred to herein, individually and/or collectively, by the term "disclosure" merely for convenience and without intending to voluntarily limit the scope of this application to any particular disclosure or inventive concept. Moreover, although specific examples have been illustrated and described herein, it should be appreciated that any subsequent arrangement designed to achieve the same or similar purpose may be substituted for the specific examples shown. This disclosure is intended to cover any and all subsequent adaptations or variations of various embodiments. Combinations of the above examples, and other examples not specifically described herein, will be apparent to those of skill in the art upon reviewing the description.

For simplicity of exposition, the term 'database' was employed in aspects of the above discussion. It will be readily apparent to one of ordinary skill in the art that in the context of the above discussion the scope of that term is not limited just to for example a database management system but rather encompasses inter alia any data source, data model, etc.

In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

The above disclosed subject matter is to be considered illustrative, and not restrictive, and the appended claims are intended to cover all such modifications, enhancements, and other embodiments which fall within the scope of the present disclosure.

## Claims

1. A server system (120), comprising:
a request handler (124) receiving at least one request for data from a mobile client device (110) on a user side or from a source server; and
a database generator (126),
wherein the request handler is arranged to determine whether the at least one request requires an initialization of a first mobile database (112) in the mobile client device on the user side, wherein the request handler determines that the at least one request requires the initialization of the first mobile database, if a portion of the requested data of the first mobile database does not exist in the mobile client device on the user side and if the portion is greater than a preset amount,
wherein, if the request handler determines that the at least one request requires initialization of the first mobile database, the database generator is arranged to generate a second mobile database (122) in the server system populated with corresponding requested data from the source server,
and wherein the request handler is arranged to transmit the second mobile database with the corresponding requested data as a file to the mobile client device for storage on the mobile client device as the first mobile database, whereby the transmitted second mobile database replaces the first mobile database at the mobile client device.

2. The server system of claim 1, wherein the request handler determines that the at least one request requires the initialization of the first mobile database, if the portion is greater than a preset percentage of total requested data.

3. The server system of any of the preceding claims, wherein the server system communicates with the mobile client device via a wireless link.

4. The server system of any of the preceding claims, wherein the server system communicates with the data source server via a wired network.

5. A method of a server system (120), comprising:
receiving, by a request handler (124), at least one request for data from a mobile client device (110) on a user side or from a source server; and
determining, by the request handler, whether the at least one request requires an initialization of a first mobile database (112) in the mobile client device on the user side, wherein the request handler determines that the at least one request requires the initialization of the first mobile database, if a portion of the requested data of the first mobile database does not exist in the mobile client device on the user side and if the portion is greater than a preset amount;
if the request handler determines that the at least one request requires initialization of the first mobile database, generating, by a database generator (126), a second mobile database (122) in the server system populated with corresponding requested data from the source server, and
transmitting, by the request handler, the second mobile database with the corresponding requested data as a file to the mobile client device for storage on the mobile client device as the first mobile database; and
replacing, at the mobile client device, the first mobile database with the transmitted second mobile database.

6. The method of claim 5, wherein the request handler determines that the at least one request requires the initialization of the first mobile database, if the portion is greater than a preset percentage of total requested data.

7. The method of claim 5 or 6, wherein the server system communicates with the mobile client device via a wireless link.

8. The method of any of claims 5 to 7, wherein the server system communicates with the data source server via a wired network.

9. A non-transitory computer readable medium storing program code executable by a processor of a server system, the program code adapted, when executed, to perform a method as set out in any of claims 5 to 8.

## Patentansprüche

1. Serversystem (120), das Folgendes umfasst:
einen Anforderungshandler (124), der mindestens eine Anforderung nach Daten von einer mobilen Clientvorrichtung (110) auf einer Benutzerseite oder von einem Quellenserver empfängt; und
einen Datenbankgenerator (126),
wobei der Anforderungshandler dafür ausgelegt ist, zu bestimmen, ob die mindestens eine Anforderung eine Initialisierung einer ersten mobilen Datenbank (112) in der mobilen Clientvorrichtung auf der Benutzerseite erfordert, wobei der Anforderungshandler bestimmt, dass die mindestens eine Anforderung die Initialisierung der ersten mobilen Datenbank erfordert, wenn ein Teil der angeforderten Daten der ersten mobilen Datenbank in der mobilen Clientvorrichtung auf der Benutzerseite nicht existiert und wenn der Teil größer als ein voreingestellter Betrag ist,
wobei, wenn der Anforderungshandler bestimmt, dass die mindestens eine Anforderung die Initialisierung der ersten mobilen Datenbank erfordert, der Datenbankgenerator dafür ausgelegt ist, eine zweite mobile Datenbank (122) in dem Serversystem zu erzeugen, die mit entsprechenden angeforderten Daten von dem Quellenserver gefüllt ist,
und wobei der Anforderungshandler dafür ausgelegt ist, die zweite mobile Datenbank mit den entsprechenden angeforderten Daten als eine Datei zu der mobilen Clientvorrichtung zur Speicherung auf der mobilen Clientvorrichtung als erste mobile Datenbank zu übertragen, wodurch die übertragene zweite mobile Datenbank die erste mobile Datenbank auf der mobilen Clientvorrichtung ersetzt.

2. Serversystem nach Anspruch 1, wobei der Anforderungshandler bestimmt, dass die mindestens eine Anforderung die Initialisierung der ersten mobilen Datenbank erfordert, wenn der Teil größer als ein voreingestellter Prozentsatz der gesamten angeforderten Daten ist.

3. Serversystem nach einem der vorhergehenden Ansprüche, wobei das Serversystem über eine drahtlose Verbindung mit der mobilen Clientvorrichtung kommuniziert.

4. Serversystem nach einem der vorhergehenden Ansprüche, wobei das Serversystem über ein drahtgebundenes Netzwerk mit dem Datenquellenserver kommuniziert.

5. Verfahren eines Serversystems (120), das Folgendes umfasst:
Empfangen durch einen Anforderungshandler (124) mindestens einer Anforderung nach Daten von einer mobilen Clientvorrichtung (110) auf einer Benutzerseite oder von einem Quellenserver; und
Bestimmen durch den Anforderungshandler, ob die mindestens eine Anforderung eine Initialisierung einer ersten mobilen Datenbank (112) in der mobilen Clientvorrichtung auf der Benutzerseite erfordert, wobei der Anforderungshandler bestimmt, dass die mindestens eine Anforderung die Initialisierung der ersten mobilen Datenbank erfordert, wenn ein Teil der angeforderten Daten der ersten mobilen Datenbank in der mobilen Clientvorrichtung auf der Benutzerseite nicht existiert und wenn der Teil größer als ein voreingestellter Betrag ist;
wenn der Anforderungshandler bestimmt, dass die mindestens eine Anforderung die Initialisierung der ersten mobilen Datenbank erfordert, Erzeugen durch den Datenbankgenerator (126) einer zweiten mobilen Datenbank (122) in dem Serversystem, die mit entsprechenden angeforderten Daten von dem Quellenserver gefüllt ist, und
Übertragen der zweiten mobilen Datenbank durch den Anforderungshandler mit den entsprechenden angeforderten Daten als eine Datei zu der mobilen Clientvorrichtung zur Speicherung auf der mobilen Clientvorrichtung als erste mobile Datenbank; und
Ersetzen der ersten mobilen Datenbank auf der mobilen Clientvorrichtung durch die übertragene zweite mobile Datenbank.

6. Verfahren nach Anspruch 5, wobei der Anforderungshandler bestimmt, dass die mindestens eine Anforderung die Initialisierung der ersten mobilen Datenbank erfordert, wenn der Teil größer als ein voreingestellter Prozentsatz der gesamten angeforderten Daten ist.

7. Verfahren nach Anspruch 5 oder 6, wobei das Serversystem über eine drahtlose Verbindung mit der mobilen Clientvorrichtung kommuniziert.

8. Verfahren nach einem der Ansprüche 5 bis 7, wobei das Serversystem über ein drahtgebundenes Netzwerk mit dem Datenquellenserver kommuniziert.

9. Nicht transitorisches computerlesbares Medium, das einen Programmcode speichert, der von einem Prozessor eines Serversystems ausführbar ist, wobei der Programmcode dafür ausgelegt ist, bei der Ausführung ein Verfahren nach einem der Ansprüche 5 bis 8 durchzuführen.

## Revendications

1. Système serveur (120), comprenant :
un gestionnaire de demandes (124) recevant au moins une demande de données en provenance d'un dispositif client mobile (110) côté utilisateur ou en provenance d'un serveur source ; et
un générateur de base de données (126),
le gestionnaire de demandes étant conçu pour déterminer si l'au moins une demande exige une initialisation d'une première base de données mobile (112) dans le dispositif client mobile côté utilisateur, le gestionnaire de demandes déterminant que l'au moins une demande exige l'initialisation de la première base de données mobile si une partie des données demandées de la première base de données mobile n'existe pas dans le dispositif client mobile côté utilisateur et si la partie est supérieure à une valeur prédéfinie,
le générateur de base de données étant conçu, si le gestionnaire de demandes détermine que l'au moins une demande exige l'initialisation de la première base de données mobile, pour générer dans le système serveur une seconde base de données mobile (122) remplie avec les données demandées correspondantes en provenance du serveur source,
et le gestionnaire de demandes étant conçu pour transmettre au dispositif client mobile la seconde base de données mobile avec les données demandées correspondantes sous la forme d'un fichier destiné à être stocké sur le dispositif client mobile en guise de première base de données mobile, la seconde base de données mobile transmise remplaçant la première base de données mobile sur le dispositif client mobile.

2. Système serveur selon la revendication 1, dans lequel le gestionnaire de demandes détermine que l'au moins demande exige l'initialisation de la première base de données mobile si la partie est supérieure à un pourcentage prédéfini des données demandées totales.

3. Système serveur selon l'une quelconque des revendications précédentes, le système serveur communiquant avec le dispositif client mobile par l'intermédiaire d'une liaison sans fil.

4. Système serveur selon l'une quelconque des revendications précédentes, le système serveur communiquant avec le serveur source de données par l'intermédiaire d'un réseau câblé.

5. Procédé d'un système serveur (120), consistant à :
recevoir, par un gestionnaire de demandes (124), au moins une demande de données en provenance d'un dispositif client mobile (110) côté utilisateur ou en provenance d'un serveur source ; et
déterminer, par le gestionnaire de demandes, si l'au moins une demande exige une initialisation d'une première base de données mobile (112) dans le dispositif client mobile côté utilisateur,
le gestionnaire de demandes déterminant que l'au moins une demande exige l'initialisation de la première base de données mobile si une partie des données demandées de la première base de données mobile n'existe pas dans le dispositif client mobile côté utilisateur et si la partie est supérieure à une valeur prédéfinie ;
si le gestionnaire de demandes détermine que l'au moins une demande exige l'initialisation de la première base de données mobile, générer dans le système serveur, par un générateur de base de données (126), une seconde base de données mobile (122) remplie avec les données demandées correspondantes en provenance du serveur source, et
transmettre au dispositif client mobile, par le gestionnaire de demandes, la seconde base de données mobile avec les données demandées correspondantes sous la forme d'un fichier destiné à être stocké sur le dispositif client mobile en guise de première base de données mobile ; et
remplacer, sur le dispositif client mobile, la première base de données mobile par la seconde base de données mobile transmise.

6. Procédé selon la revendication 5, dans lequel le gestionnaire de demandes détermine que l'au moins demande exige l'initialisation de la première base de données mobile si la partie est supérieure à un pourcentage prédéfini des données demandées totales.

7. Procédé selon la revendication 5 ou 6, dans lequel le système serveur communique avec le dispositif client mobile par l'intermédiaire d'une liaison sans fil.

8. Procédé selon l'une quelconque des revendications 5 à 7, dans lequel le système serveur communique avec le serveur source de données par l'intermédiaire d'un réseau câblé.

9. Support non temporaire lisible par ordinateur stockant un code de programme exécutable par un processeur d'un système serveur, le code de programme étant conçu, lorsqu'il est exécuté, pour réaliser un procédé selon l'une quelconque des revendications 5 à 8.
